Europäisches Patentamt

(19) European Patent Office

Office européen des brevets

(11) Numéro de publication : **0 138 052**
**B1**

(12) FASCICULE DE BREVET EUROPÉEN

(45) Date de publication du fascicule du brevet :
17.08.88

(51) Int. Cl.⁴ : **G 02 B  6/44**

(21) Numéro de dépôt : **84110810.3**

(22) Date de dépôt : **11.09.84**

(54) Boîte de jonction pour le raccordement par soudre des extrémités de deux cables sous-marins à fibres optiques.

(30) Priorité : 16.09.83 FR 8314765

(43) Date de publication de la demande :
24.04.85 Bulletin 85/17

(45) Mention de la délivrance du brevet :
17.08.88 Bulletin 88/33

(84) Etats contractants désignés :
DE FR GB IT

(56) Documents cités :
EP-A- 0 083 101
JOURNAL OF OPTICAL COMMUNICATIONS, vol. 1,
no. 2, novembre 1980, pages 58-63, Berlin, DE; H.
HORIMA et al.: "Characteristics of jelly-filled optical
cables"
INSTITUTE OF ELECTRONIC AND COMMUNICATION
ENGINEERING OF JAPAN, INTERNATIONAL CONFE-
RENCE ON INTEGRATED OPTICS AND OPTICAL
FIBER COMMUNICATION, Technical Digest, 18-20
juillet 1977, pages 281-284, Tokyo, JP; H. MURATA et
al.: "Recent development of optical fiber and cable
for public communication"

(73) Titulaire : **LES CABLES DE LYON Société anonyme
dite:**
**170 quai de Clichy**
**F-92111 Clichy Cedex (FR)**

(72) Inventeur : **Mignien, Georges**
**1, Résidence Les Capucines Leulinghen Bernes**
**F-62250 Marquise (FR)**
Inventeur : **Fasquel, Didier**
**5, rue Mallet Stevens Appt. 9**
**F-62100 Calais (FR)**

(74) Mandataire : **Weinmiller, Jürgen et al**
**Lennéstrasse 9 Postfach 24**
**D-8133 Feldafing (DE)**

## Description

La présente invention concerne une boîte de jonction des extrémités de deux câbles sous-marins à fibres optiques, avec raccordement par soudures des extrémités des fibres optiques.

La réalisation d'une soudure (ou d'une série de soudures) pour raccorder entre elles deux extrémités de fibres optiques, nécessite un grand excès de longueur de fibres. Une fois la soudure achevée, il faut emmagasiner cet excès, sans former de courbe à rayon trop petit.

L'invention part d'un état de la technique tel qu'il est décrit par le document EP 0 083 101, montrant une boîte de jonction comportant deux pièces d'ancrage d'extrémité et un mandrin central recevant l'excès de longueur de fibres. Les fibres sont soudées puis enroulées sur le mandrin et les soudures sont fixées sur celui-ci. Les fibres sont donc totalement immobilisées et ceci présente un risque de casse à la moindre sollicitation de traction. De plus, ce dispositif nécessite un remplissage par un produit visqueux ou hydrophobe pour protéger les fibres contre l'humidité.

La présente invention a pour but de laisser une liberté de translation aux fibres optiques par l'adjonction de boîtes à mou qui reçoivent l'excès de longueur de fibres. La boîte de jonction ainsi réalisée présente également une étanchéité efficace sans obligatoirement avoir recours à des produits de remplissage.

La présente invention a pour objet une boîte de jonction des extrémités de deux câbles sous-marins à fibres optiques avec raccordement par soudures des extrémités de fibres optiques faisant saillie de l'un et l'autre câbles, ladite boîte de jonction comportant, respectivement, deux éléments de blocage aptes à recevoir chacun une extrémité de l'un des deux câbles, un manchon tubulaire étanche connectant par ses extrémités l'un et l'autre éléments de blocage, et un mandrin central creux disposé à l'intérieur dudit manchon tubulaire étanche et entre lesdits éléments de blocage, ce mandrin comportant des ouvertures latérales à ses deux extrémités pour le passage des fibres optiques en provenance des câbles de l'intérieur à l'extérieur du mandrin, les soudures effectuées sur les extrémités des fibres optiques étant alors fixées contre la surface latérale externe du mandrin, caractérisée en ce que ladite boîte de jonction comporte en outre une boîte à mou disposée entre chaque élément de blocage et l'extrémité correspondante du mandrin, la partie interne de chaque élément de blocage comportant une cavité cylindrique munie de moyens de fixation pour recevoir la boîte à mou· correspondante.

Avantageusement les moyens de fixation des boîtes à mou sur les éléments de blocage sont des pas de vis, et un passage d'étanchéité longitudinale est disposé, dans chaque élément de blocage, en amont de la boîte à mou. Une telle étanchéité peut par exemple être prévue pour résister à 700 bars. En cas d'avarie au câble, en un point quelconque, l'humidité ne s'étend pas au-delà du passage étanche.

Il est décrit ci-après, à titre d'exemple non limitatif et en référence aux dessins ci-joints, une boîte de jonction selon l'invention.

La figure 1 représente une boîte de jonction selon l'invention.

La figure 2 représente une vue agrandie de la figure 1, suivant II de cette figure 1.

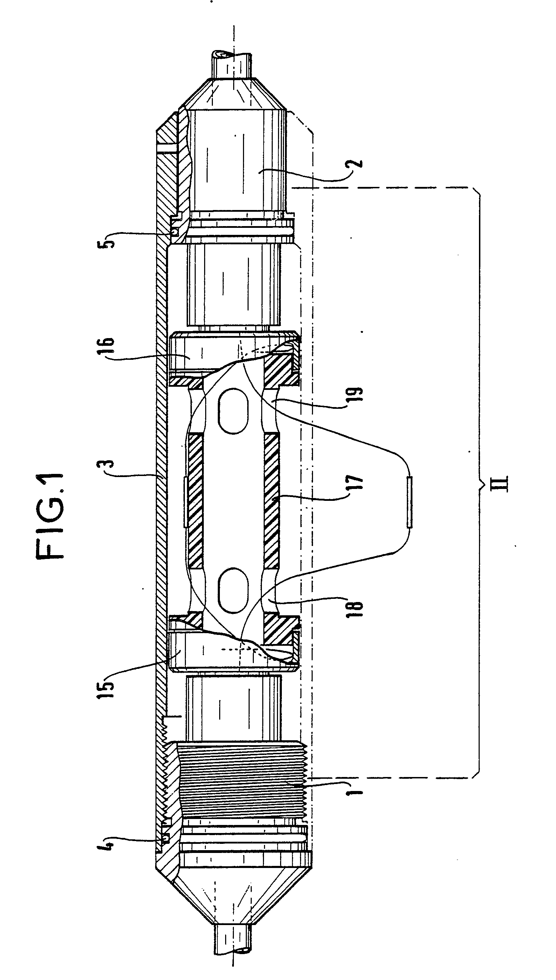

La figure 1 du dessin comporte des arrachements pour montrer, en coupe dans sa moitié supérieure, un manchon 3 recouvrant la jonction, et dans sa moitié inférieure, la jonction à la fin des opérations de soudure avant la mise en place du manchon 3.

La boîte de jonction comporte à chaque extrémité un élément de blocage 1, 2 réunis de façon étanche extérieurement par le manchon 3, avec interposition de joints appropriés 4, 5. Les deux éléments 1, 2 sont identiques intérieurement, pour recevoir chacun, de façon connue, une extrémité d'un câble à fibres optiques.

Chaque élément de blocage 1, 2 reçoit à son extrémité interne, une boîte à mou 15, 16. Entre ces boîtes à mou est placé un mandrin 17 muni d'ouvertures 18, 19 dans sa partie latérale.

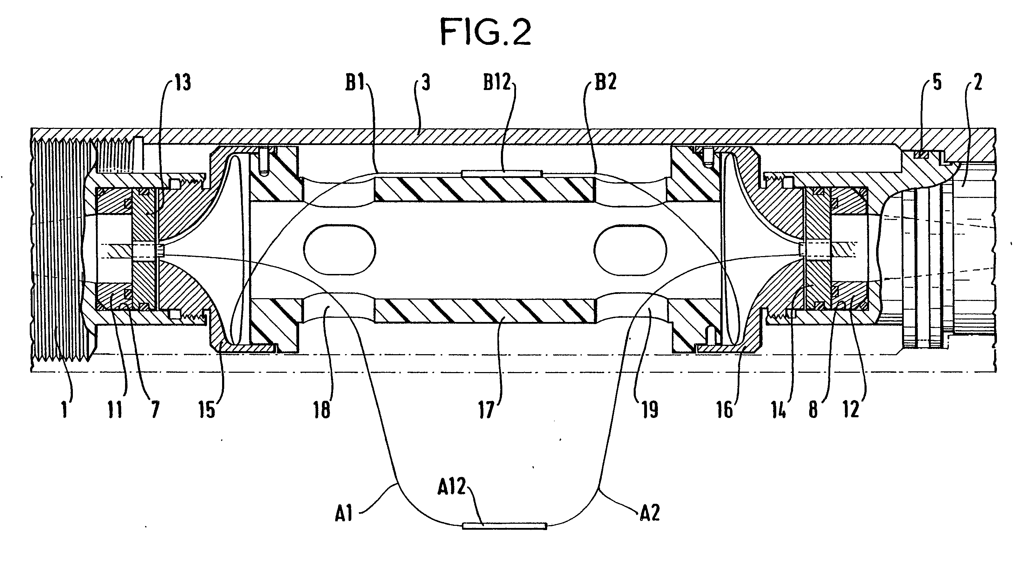

La partie interne de chaque élément de blocage 1, 2, visible en figure 2, est formée d'une cavité cylindrique 7, 8, dans laquelle on peut loger une rondelle 11, 12, un passage d'étanchéité longitudinale 13, 14 et la boîte à mou 15, 16. Cette étanchéité longitudinale est obtenue par le passage des fibres dans des trous calibrés rendus étanches à l'aide d'une colle.

Entre les deux boîtes à mou 15, 16 est disposé le mandrin 17 creux muni au voisinage de chacune de ses extrémités d'une série d'ouvertures 18, 19.

Une opération de jonction se passe de la manière suivante :

- Après avoir fixé un élément de blocage sur chaque extrémité de câble, ayant pris avant la précaution d'enfiler du bon côté et dans le bon sens le manchon 3 de liaison, on installe les passages d'étanchéité longitudinale 13, 14. Ces opérations sont classiques chacune en elle-même.

- On fixe ensuite les boîtes à mou 15, 16, et on solidarise mécaniquement les deux extrémités des câbles au moyen du mandrin 17 que l'on interpose et fixe au moyen de vis par exemple.

- On sort une fibre optique $A_1$ du câble de gauche et on la passe par une ouverture 18 du mandrin pour l'amener à l'extérieur, pour pouvoir la souder à la fibre $A_2$ du câble de droite, sortie de la même manière par une ouverture 19. On a pris soin de dégarnir les câbles sur une longueur suffisante pour avoir des brins $A_1$ et $A_2$ assez longs pour permettre une manipulation et une soudure dans des conditions aisées. On a représenté une soudure $A_{12}$.

- Une fois la soudure effectuée et renforcée, on repousse les brins de chaque côté dans les boîtes à mou 15, 16, où ils se lovent sans former de pli ni de courbe de faible diamètre et l'on vient appliquer la soudure contre le mandrin où elle peut être collée ou fixée de toute façon appropriée (vis, crochet, etc.). On a représenté ainsi une soudure $B_{12}$, joignant les fibres optiques $B_1$ et $B_2$, dont les longueurs excédentaires ont été renvoyées dans les boîtes à mou respectives.

- Une fois les fibres correctement rentrées, on met en place le manchon tubulaire 3 et on le fixe, par vissage par exemple comme représenté.

L'espace intérieur est isolé de façon étanche, par les joints 4, 5 entre le manchon et les éléments de blocage 1, 2 et par les passages d'étanchéité longitudinale 13, 14.

La boîte de jonction ainsi constituée est simple et sûre, sa mise en place est facile et l'exécution du raccordement ne demande pas d'aptitude spéciale autre que celle qui est requise pour la soudure. La mise en place des fibres se fait automatiquement.

## Revendications

1. Boîte de jonction des extrémités de deux câbles sous-marins à fibres optiques avec raccordement par soudures des extrémités des fibres optiques faisant saillie de l'un et l'autre câbles, ladite boîte de jonction comportant, respectivement, deux éléments (1, 2) de blocage aptes à recevoir chacun une extrémité de l'un des deux câbles, un manchon tubulaire étanche (3) connectant par ses extrémités l'un et l'autre éléments de blocage, et un mandrin central creux (17) disposé à l'intérieur dudit manchon tubulaire étanche et entre lesdits éléments de blocage, ce mandrin comportant des ouvertures latérales (18, 19) à ses deux extrémités pour le passage des fibres optiques en provenance des câbles de l'intérieur à l'extérieur du mandrin, les soudures effectuées sur les extrémités des fibres optiques étant alors fixées contre la surface latérale externe du mandrin, caractérisée en ce que ladite boîte de jonction comporte en outre une boîte à mou (15, 16) disposée entre chaque élément de blocage et l'extrémité correspondante du mandrin, la partie interne de chaque élément de blocage comportant une cavité cylindrique (7, 8) munie de moyens de fixation pour recevoir la boîte à mou correspondante.

2. Boîte de jonction selon la revendication 1, caractérisée en ce que les moyens de fixation des boîtes à mous sur les éléments de blocage sont des pas de vis.

3. Boîte de jonction selon l'une des revendications 1 à 2, caractérisée en ce qu'un passage d'étanchéité longitudinale (13, 14) est disposé, dans chaque élément de blocage, en amont de la boîte à mou.

## Claims

1. A junction box for joining the ends of two underwater optical fibre cables, by welding together the ends of the optical fibres projecting from the cables, said junction box comprising respectively two blocking members (1, 2), each of which is adapted to receive one end of one of the cables, a tight tubular sleeve (3) connecting by its ends the one and the other of the blocking members, and a central hollow mandrel (17) disposed inside said tight tubular sleeve and between said blocking members, wherein the mandrel is provided with lateral openings (18, 19) at both ends for allowing the optical fibres emerging from the cables to pass therethrough from the inside to the outside of the mandrel, the welds applied to the ends of the optical fibres being then fixed to the lateral external surface of the mandrel, characterized in that the junction box further comprises a slack box (15, 16) disposed between each of the blocking members and the corresponding end of the mandrel, the inner portion of each blocking member including a cylindrical cavity (7, 8), provided with fixing means for receiving the corresponding slack box.

2. A junction box according to claim 1, characterized in that the means for fixing the slack boxes at the blocking members are screw threads.

3. A junction box according to one of claims 1 to 2, characterized in that a longitudinal sealing passage (13, 14) is disposed upstream the slack box in each blocking member.

## Patentansprüche

1. Verbindungsarmatur zum Anschluß der Enden zweier Unterwasserkabel mit optischen Fasern, bei denen die Verbindung durch Verschweißen der aus dem einen und dem anderen Kabel herausragenden optischen Faserenden erfolgt, und die Verbindungsarmatur zwei Blockierelemente (1, 2) zur Aufnahme je eines Endes eines der beiden Kabel, eine dichte rohrförmige Hülse (3) zum endseitigen Anschluß der beiden Blockierelemente, und eine hohle zentrale Büchse (17) aufweist, die im Inneren der dichten rohrförmigen Hülse zwischen den Blockierelementen liegt, wobei die Büchse seitliche Öffnungen (18, 19) an ihren beiden Enden besitzt, durch die die von den Kabeln kommenden optischen Fasern von innerhalb nach außerhalb der Büchse hindurchtreten und wobei die an den Enden der optischen Fasern ausgeführten Schweißungen an der äußeren Seitenfläche der Büchse befestigt werden, dadurch gekennzeichnet, daß die Verbindungsarmatur weiter eine Dose zur Ablage von Überlängen (15, 16) zwischen jedem Blockierelement und dem entsprechenden Büchsenende aufweist und die Innenpartie jedes Blockierelements eine zylindrische Aushöhlung (7, 8) mit Haltemitteln zur Aufnahme der entsprechenden Ablagedose besitzt.

2. Verbindungsarmatur nach Anspruch 1, dadurch gekennzeichnet, daß die Mittel zur Halterung der Ablagedosen in den Blockierelementen Gewindegänge sind.

3. Verbindungsarmatur nach einem der Ansprüche 1 bis 2, dadurch gekennzeichnet, daß ein dichter Längsdurchlaß (13, 14) in jedem Blockierelement vor der Ablagedose vorhanden ist.

FIG.1

# FIG.2

0 138 052